# FASCICULE DE BREVET EUROPEEN

(11) **EP 1 867 914 B1**
(45) Date de publication et mention de la délivrance du brevet: **26.08.2009**
(21) Numéro de dépôt: 07290731.4
(22) Date de dépôt: 12.06.2007
(51) Int. Cl.: F21S 8/12, F21V 7/00

(54) **Projecteur d'éclairage à double source lumineuse pour véhicule automobile**
Leuchtscheinwerfer mit doppelter Lichtquelle für Kraftfahrzeuge
Headlight with dual light source for an automobile vehicle

(30) Priorité: 15.06.2006 FR 0605364
(43) Date de publication de la demande: 19.12.2007
(73) Titulaire: VALEO VISION, 93012 Bobigny Cedex (FR)
(72) Inventeur: Maliar, Rémi, 59880 Saint Saulve (FR); Herbin, Cyril, 59530 Potelle (FR)

(56) Documents cités:
- EP-A2- 1 150 060
- DE-A1- 19 649 786
- FR-A- 1 533 682
- FR-A- 2 829 225
- US-A- 1 798 132
- US-A- 3 622 778

## Description

L'invention concerne un projecteur d'éclairage à double source lumineuse pour véhicule automobile.

L'invention concerne plus particulièrement un projecteur d'éclairage à double source lumineuse pour véhicule automobile, comportant :
- un premier réflecteur arrière de lumière qui est globalement de la forme d'une portion de paraboloïde ouverte vers l'avant et qui est associé à une première source lumineuse ponctuelle de façon à produire un premier faisceau lumineux vers l'avant selon un premier axe optique globalement longitudinal,
- un second réflecteur avant de lumière qui est globalement de la forme d'une portion de paraboloïde ouverte vers l'avant et qui est associé à une seconde source lumineuse ponctuelle de façon à produire un second faisceau lumineux vers l'avant selon un second axe optique globalement longitudinal.

Le domaine de l'invention est, d'une façon générale, celui des projecteurs d'automobiles comportant deux sources lumineuses, chaque source coopérant avec un réflecteur de lumière associé pour produire un faisceau lumineux spécifique.

Le document US-A-3622778 décrit un tel projecteur pour automobile.

Selon ce document, le projecteur comporte d'une part, pour l'éclairage de "croisement", un réflecteur principal comportant une face réfléchissante de forme d'un paraboloïde de révolution, coopérant avec une lampe à iode placée légèrement en avant de son foyer. Un écran d'occultation est associé à la lampe pour définir une coupure du faisceau de croisement.

D'autre part, le projecteur comporte, pour l'éclairage "route", un réflecteur auxiliaire comportant une face réfléchissante de forme d'un paraboloïde de révolution dont le diamètre de l'ouverture est sensiblement égale à la moitié du diamètre de l'ouverture du réflecteur principal.

Le réflecteur auxiliaire est logé .dans la partie inférieure du réflecteur principal. Le réflecteur auxiliaire coopère avec une lampe à iode qui est placée à son foyer.

L'axe du réflecteur auxiliaire est légèrement décalé latéralement par rapport au plan vertical passant par l'axe central du réflecteur principal pour que le contour d'ouverture du réflecteur auxiliaire soit en dessous de la coupure et sensiblement tangent au plan de coupure défini par la coupelle associée à la lampe coopérant avec le réflecteur principal.

Un dispositif voisin du document US-A-3622778 est décrit dans le document FR1553682. Dans ce dernier, la partie haute du réflecteur additionnel est tronquée, de sorte que la source lumineuse du réflecteur additionnel peut coopérer avec le réflecteur arrière.

On connaît aussi un projecteur de conception différente comportant deux sources lumineuses, qui est décrit dans le document US-A-1798132.

D'une part, selon ce document, le projecteur comporte un réflecteur principal comportant une face réfléchissante de la forme d'un paraboloïde de révolution qui est tronquée d'une moitié supérieure selon un plan horizontal. La face réfléchissante coopère avec une première source lumineuse agencée à son foyer pour produire un premier faisceau lumineux vers l'avant.

D'autre part, le projecteur comporte un réflecteur auxiliaire comportant une face réfléchissante de la forme d'un paraboloïde de révolution. La face réfléchissante coopère avec une seconde source lumineuse agencée à son foyer pour produire un deuxième faisceau lumineux vers l'avant.

Le réflecteur auxiliaire est agencé au dessus du réflecteur principal et comporte une fenêtre inférieure à travers laquelle une partie de la lumière émise par la seconde source lumineuse est apte à se propager globalement vers l'arrière et à être réfléchie par le réflecteur principal, pour produire un troisième faisceau lumineux.

Le document DE19649786, décrit un module optique comprenant un réflecteur en deux parties : une partie arrière à génératrice parabolique, à la focale de laquelle est placée une lampe arrière, et une partie avant à génératrice parabolique, à la focale de laquelle est placée une lampe avant. Les lampes sont alignées sur l'axe optique des deux réflecteurs.

Les projecteurs de l'art antérieur décrits précédemment permettent de produire au moins deux faisceaux lumineux de fonctions différentes au moyen de deux sources lumineuses au sein d'un projecteur unique.

Cependant, les projecteurs à deux sources lumineuses appartenant à l'art antérieur sont volumineux.

Cet inconvénient est dû à l'agencement des réflecteurs qui augmente notamment l'encombrement radial des projecteurs à deux sources lumineuses de l'art antérieur par rapport aux projecteurs à une source lumineuse.

Pour remédier à cet inconvénient, l'invention propose un projecteur du type décrit précédemment, caractérisé en ce que le second réflecteur avant est agencé devant le premier réflecteur arrière et en ce que le second réflecteur avant comporte une fenêtre à travers laquelle au moins une partie du premier faisceau lumineux est apte à se propager.

Selon d'autres caractéristiques de l'invention :
- la fenêtre formée dans le second réflecteur avant est centrée selon l'axe optique du second réflecteur avant,
- la seconde source lumineuse qui est associée au second réflecteur avant est décalée radialement par rapport à l'axe optique du premier réflecteur arrière,
- l'axe optique du réflecteur avant est parallèle et décalé vers le bas par rapport à l'axe optique du réflecteur arrière,
- le projecteur présente un plan vertical de symétrie passant par l'axe optique du premier réflecteur arrière et par l'axe optique du second réflecteur avant,
- la seconde source lumineuse est une lampe disposée selon un axe, qui s'étend dans le plan de symétrie et de façon oblique par rapport à l'axe optique du réflecteur avant,
- la portion de paraboloïde formant le premier réflecteur arrière est globalement de la forme d'un bandeau qui s'étend transversalement,
- la fenêtre formée dans le second réflecteur avant est globalement de la forme d'un bandeau transversal autour duquel le second réflecteur avant forme un anneau,
- le premier réflecteur arrière est monté pivotant autour d'un axe transversal qui est orthogonal à l'axe optique du premier réflecteur arrière, entre une position angulaire basse dans laquelle le premier faisceau lumineux est orienté sensiblement vers le bas et une position angulaire haute dans laquelle le premier faisceau lumineux est orienté sensiblement vers le haut,
- la fenêtre est suffisamment haute pour que globalement la totalité du premier faisceau lumineux soit apte à se propager à travers ladite fenêtre, quelque soit la position angulaire du premier réflecteur arrière,
- le projecteur comporte un boîtier globalement cylindrique dans lequel est agencé au moins le premier réflecteur arrière et le second réflecteur avant,
- le premier faisceau lumineux est apte à remplir une fonction de feu anti-brouillard,
- le second faisceau lumineux est apte à remplir une fonction de feu diurne.

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique en coupe axiale selon la ligne 1-1 de la figure 2, qui représente un projecteur avant pour véhicule automobile comportant deux sources lumineuses selon l'invention ;
- la figure 2 est une vue schématique de face qui représente le projecteur de la figure 1 ;
- la figure 3 est une vue éclatée en perspective qui représente une variante de réalisation du projecteur de la figure 1.

Dans la description qui va suivre, on emploiera la terminologie longitudinale, verticale et transversale en référence au trièdre L, V, T représentés aux figures et avant et arrière en référence à la direction générale de propagation des faisceaux lumineux du projecteur.

De plus, des éléments identiques, similaires ou analogues seront désignés par des mêmes chiffres de référence.

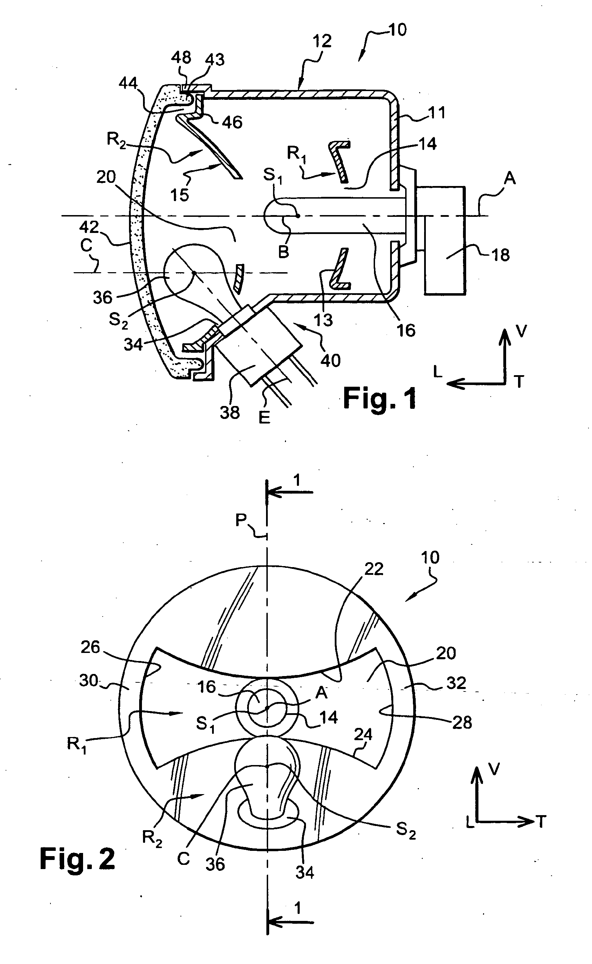

On a représenté à la figure 1 un projecteur 10 avant d'éclairage à double source lumineuse pour véhicule automobile (non représenté) qui comporte un axe A général longitudinal.

On entend par axe longitudinal, un axe qui s'étend globalement parallèlement au plan tangent de la route sur laquelle le véhicule automobile se déplace.

Le projecteur 10 comporte un boîtier 12 qui est globalement de la forme d'un cylindre longitudinal d'axe A dont l'extrémité arrière est obturée par une paroi de fond 11 transversale.

Le projecteur 10 présente un plan médian P vertical longitudinal de symétrie, représenté à la figure 2, qui passe par l'axe A du projecteur 10.

Le projecteur 10 comporte un premier réflecteur arrière R1 de lumière qui est agencé dans une partie arrière du boîtier 12.

Le réflecteur arrière R1 comporte une surface réfléchissante 13 intérieure qui est de la forme d'une portion concave de paraboloïde ouverte vers l'avant et qui comporte un axe optique B coaxial à l'axe A du projecteur 10.

Plus particulièrement, le réflecteur arrière R1 est ici tronqué dans sa partie supérieure et dans sa partie inférieure, de sorte que le réflecteur R1 forme un bandeau qui s'étend transversalement.

La surface réfléchissante 13 du réflecteur arrière R1 est par exemple une surface qui a subi un traitement de surface la rendant réfléchissante, comme un traitement consistant à déposer un revêtement réfléchissant de faible épaisseur, notamment un aluminage, de sorte que la surface réfléchissante 13 soit apte à réfléchir les rayons lumineux qui l'atteignent.

Le réflecteur arrière R1 est associé à une première source lumineuse S1 ponctuelle qui est agencée dans un foyer du réflecteur arrière R1.

Le foyer du réflecteur arrière R1 est agencé sur l'axe optique B, à l'avant du réflecteur arrière R1.

A cet effet, le réflecteur arrière R1 comporte un trou de passage 14 central à travers lequel s'étend axialement une lampe 16 tubulaire longitudinale qui est apte à produire la première source lumineuse S1.

La lampe 16 est ici portée par un boîtier d'alimentation 18 qui est fixé à l'extérieur du boîtier 12 du projecteur 10, sur la paroi de fond 11 transversale du boîtier 12.

Ainsi, le réflecteur arrière R1 est apte à réfléchir les rayons lumineux émis par la première source lumineuse S1 de façon à produire un premier faisceau lumineux globalement longitudinal vers l'avant selon l'axe optique B.

La lampe 16 est ici une lampe à incandescence ou une lampe à arc.

Toutefois, la lampe 16 peut être tout autre élément apte à émettre de la lumière.

Le projecteur 10 comporte un second réflecteur avant R2 de lumière qui est agencé dans une partie avant du boîtier 12, devant le réflecteur arrière R1, et forme une pièce distincte du réflecteur arrière R1.

Le réflecteur avant R2 est globalement de la forme d'une portion concave de paraboloïde qui est ouverte vers l'avant et qui comporte un bord périphérique circulaire annulaire.

Avantageusement, le réflecteur avant R2 est centré par rapport au réflecteur arrière R1 selon l'axe longitudinal A du projecteur 10.

Le réflecteur avant R2 comporte une fenêtre 20 à travers laquelle au moins une partie du premier faisceau lumineux est susceptible de se propager.

A cet effet, la fenêtre 20 est centrée selon l'axe optique B du réflecteur arrière R1, selon lequel se propage le premier faisceau lumineux.

Ainsi, la fenêtre 20 est ici réalisée au centre du réflecteur avant R2.

Comme on peut le voir à la figure 2, la fenêtre 20 est globalement de la forme d'un bandeau transversal de forme complémentaire à la forme du réflecteur arrière R1.

Le bord supérieur 22 et le bord inférieur 24 de la fenêtre 20 sont convexes, formant un rétrécissement vers l'intérieur de la fenêtre 20.

Le premier bord latéral 26 et le second bord latéral 28 de la fenêtre 20 sont concaves, formant un élargissement de la fenêtre 20 vers l'extérieur.

Le réflecteur avant R2 forme ici un anneau autour de la fenêtre 20, de sorte que le réflecteur avant R2 comporte une première bande latérale 30 réfléchissante et une seconde bande latérale 32 réfléchissante, de part et d'autre de la fenêtre 20.

A cet effet, le diamètre extérieur du réflecteur avant R2 est ici légèrement supérieur à la largeur maximale du réflecteur arrière R1.

Toutefois, la fenêtre 20 peut être d'une autre forme qui est avantageusement déterminée en fonction de la forme du réflecteur arrière R1 et/ou de la forme que l'on souhaite donner au premier faisceau lumineux.

Le réflecteur avant R2 est associé à une seconde source lumineuse S2 ponctuelle qui est agencée à un foyer situé sur un axe optique C, à l'avant du réflecteur avant R2.

L'axe optique C du réflecteur avant R2 est ici parallèle et décalé vers le bas par rapport à l'axe A du projecteur 10 et est situé dans le plan de symétrie P du projecteur 10.

Ainsi, la seconde source lumineuse S2, qui est située sur l'axe C, ne gêne pas ou peu la propagation du premier faisceau lumineux qui traverse la fenêtre 20 du réflecteur avant R2.

Le réflecteur avant R2 comporte une surface réfléchissante 15 qui est d'une forme complexe, proche de celle d'une portion concave de paraboloïde, de manière que les rayons lumineux qui sont émis par la seconde source lumineuse S2 soient réfléchis par le réflecteur avant R2 de façon à former un second faisceau lumineux vers l'avant selon l'axe optique C longitudinal.

La seconde source lumineuse S2 est ici une lampe 36 qui s'étend à travers un trou de passage 34 prévu à cet effet.

Le trou de passage 34 est agencé dans une partie inférieure du réflecteur avant R2, dans le plan de symétrie P.

La lampe 36 est disposée selon un axe E qui s'étend dans le plan de symétrie P et de façon oblique par rapport à l'axe optique C longitudinal.

La lampe 36 est raccordée à un boîtier d'alimentation 38 qui est fixé à l'extérieur du boîtier 12 du projecteur 10, sur une paroi du boîtier 12.

La lampe 36 est ici une lampe à incandescence ou une lampe à arc.

Toutefois, la lampe 36 peut être tout autre élément apte à émettre de la lumière.

Avantageusement, le boîtier 12 globalement cylindrique du projecteur 10 comporte une portion tronquée dans sa partie inférieure, formant un logement externe 40 dans lequel le boîtier 38 d'alimentation est agencé de façon à réduire l'encombrement du projecteur 10.

Le projecteur 10 comporte une glace 42 circulaire qui est agencée à l'extrémité avant du boîtier 12 et qui est centrée selon l'axe A du projecteur 10.

La glace 42 comporte une lèvre périphérique 43 circulaire annulaire qui est logée et retenue de manière étanche dans une rainure 44 de forme complémentaire.

La rainure 44 comporte ici un premier bord 46 circulaire intérieur qui est formé par le bord périphérique circulaire du réflecteur avant R2 et un second bord 48 circulaire extérieur qui est formé par le boîtier 12 du projecteur 10.

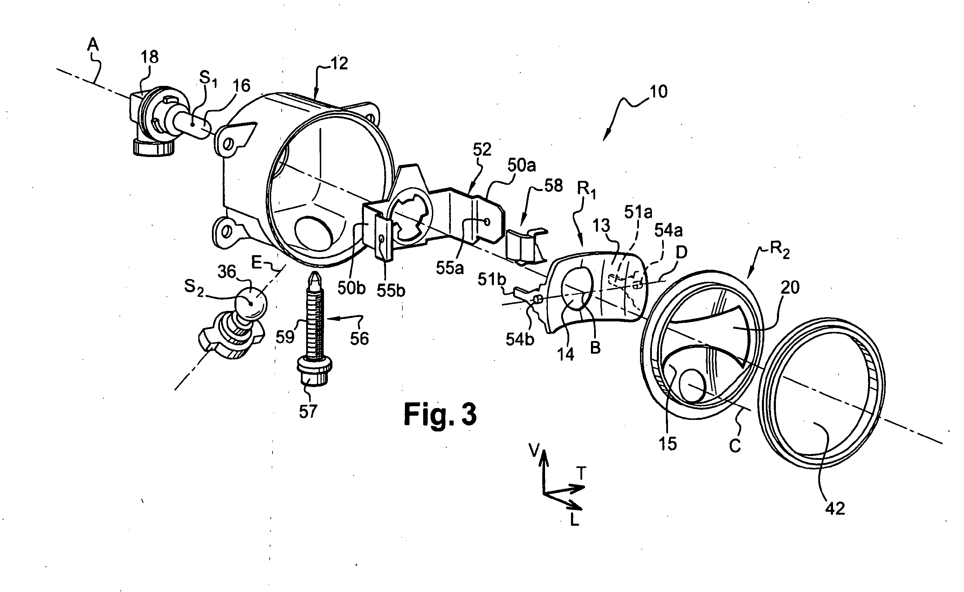

Selon une variante de réalisation de l'invention représentée en vue éclatée à la figure 3, le réflecteur arrière R1 est monté pivotant autour d'un axe D transversal et comporte par conséquent un axe optique B qui est mobile.

Le réflecteur arrière R1 est monté pivotant entre une position angulaire basse dans laquelle l'axe optique B du réflecteur arrière R1 est sensiblement incliné vers le bas par rapport à un plan longitudinal et une position angulaire haute dans laquelle l'axe optique B du réflecteur arrière R1 est sensiblement incliné vers le haut par rapport à un plan longitudinal.

A cet effet, le réflecteur arrière R1 comporte un premier bras 51a et un second bras 51 b qui s'étendent chacun longitudinalement en arrière depuis un bord d'extrémité transversal du réflecteur arrière R1.

La base de chaque bras 51a, 51b comporte un plot 54a, 54b cylindrique qui fait saillie vers l'extérieur selon l'axe D transversal de pivotement.

Le plot 54a, 54b de chaque bras 51 a, 51 b du réflecteur arrière R1 est reçu dans un logement 55a, 55b complémentaire d'un support 52 fixe par rapport au boîtier 12, de sorte que le réflecteur arrière R1 est monté mobile en pivotement autour de l'axe D par rapport au support 52.

Le support 52 est ici de la forme d'un U dont chaque branche 50a, 50b s'étend longitudinalement vers l'avant et comporte un desdits logements 55a, 55b complémentaires.

Le projecteur 10 comporte des moyens d'entraînement en pivotement du réflecteur arrière R1 autour de l'axe D.

A cet effet, une vis sans fin 56 de réglage est montée pivotante dans le boîtier 12 selon un axe vertical.

La vis sans fin 56 comporte une tête de réglage 57 et une portion filetée 59 qui entraîne un écrou 58 en translation.

L'écrou 58 est bloqué en rotation par le support 52 de sorte que l'écrou 58 soit apte à être entraîné en translation verticale par la vis sans fin 56.

Enfin, l'écrou 58 coopère avec l'extrémité libre du premier bras 51a du réflecteur R1 de manière que lorsque l'écrou 58 est entraîné en translation par la vis de réglage 56, le réflecteur arrière R1 est entraîné en pivotement autour de l'axe D.

A titre indicatif, la fenêtre 20 du réflecteur avant R2 est d'une dimension verticale suffisamment large pour permettre le réglage angulaire du réflecteur arrière R1 sans gêner le passage du premier faisceau du réflecteur arrière R1.

Selon une variante de réalisation de l'invention non représentée, l'axe optique C du réflecteur avant R2 est coaxial à l'axe optique B du réflecteur arrière R1.

Toutefois, selon ce mode de réalisation, la seconde source lumineuse S2, qui est agencée au foyer du réflecteur avant R2 sur l'axe optique C, gêne légèrement la propagation du premier faisceau lumineux du réflecteur arrière R1.

Conformément aux enseignements de l'invention, le projecteur 10 permet de produire deux faisceaux lumineux distincts et indépendants, tout en occupant un volume réduit.

A titre d'exemple, le premier faisceau lumineux rempli ici une fonction de feu anti-brouillard et le second faisceau lumineux rempli une fonction de feu diurne.

## Revendications

1. Projecteur (10) d'éclairage à double source lumineuse pour véhicule automobile, comportant :
- un premier réflecteur arrière (R1) de lumière qui est globalement de la forme d'une portion de paraboloïde ouverte vers l'avant et qui est associé à une première source lumineuse (S1) ponctuelle de façon à produire un premier faisceau lumineux vers l'avant selon un premier axe optique (B) globalement longitudinal,
- un second réflecteur avant (R2) de lumière qui est globalement de la forme d'une portion de paraboloïde ouverte vers l'avant et qui est associé à une seconde source lumineuse (S2) ponctuelle de façon à produire un second faisceau lumineux vers l'avant selon un second axe optique (C) globalement longitudinal, le second réflecteur avant (R2) étant agencé devant le premier réflecteur arrière (R1), la seconde source lumineuse (S2) étant décalée radialement par rapport à l'axe optique (B) du premier réflecteur arrière (R1).
**caractérisé en ce que** le second réflecteur avant (R2) comporte une fenêtre (20) à travers laquelle au moins une partie du premier faisceau lumineux est apte à se propager.

2. Projecteur (10) d'éclairage selon la revendication précédente, **caractérisé en ce que** la fenêtre (20) formée dans le second réflecteur avant (R2) est centrée selon l'axe optique (B) du premier réflecteur arrière (R1).

3. Projecteur (10) d'éclairage selon l'une quelconque des revendications précédentes, **caractérisé en ce que** l'axe optique (C) du réflecteur avant (R2) est parallèle et décalé vers le bas par rapport à l'axe optique (B) du réflecteur arrière (R1).

4. Projecteur (10) d'éclairage selon l'une quelconque des revendications précédentes, **caractérisé en ce qu'**il présente un plan (P) vertical de symétrie passant par l'axe optique (B) du premier réflecteur arrière (R1) et par l'axe optique (C) du second réflecteur avant (R2).

5. Projecteur (10) d'éclairage selon la revendication précédente, **caractérisé en ce que** la seconde source lumineuse (S2) est une lampe (36) disposée selon un axe (E), qui s'étend dans le plan de symétrie (P) et de façon oblique par rapport à l'axe optique (C) du réflecteur avant (R2).

6. Projecteur (10) d'éclairage selon l'une quelconque des revendications précédentes, **caractérisé en ce que** la portion de paraboloïde formant le premier réflecteur arrière (R1) est globalement de la forme d'un bandeau qui s'étend transversalement.

7. Projecteur (10) d'éclairage selon l'une quelconque des revendications précédentes, **caractérisé en ce que** la fenêtre (20) formée dans le second réflecteur avant (R2) est globalement de la forme d'un bandeau transversal autour duquel le second réflecteur avant (R2) forme un anneau.

8. Projecteur (10) d'éclairage selon l'une quelconque des revendications précédentes, **caractérisé en ce que** le premier réflecteur arrière (R1) est monté pivotant autour d'un axe (D) transversal qui est orthogonal à l'axe optique (B) du premier réflecteur arrière (R1), entre une position angulaire basse dans laquelle le premier faisceau lumineux est orienté sensiblement vers le bas et une position angulaire haute dans laquelle le premier faisceau lumineux est orienté sensiblement vers le haut.

9. Projecteur (10) d'éclairage selon la revendication précédente, **caractérisé en ce que** la fenêtre (20) est suffisamment haute pour que globalement la totalité du premier faisceau lumineux soit apte à se propager à travers ladite fenêtre (20), quelque soit la position angulaire du premier réflecteur arrière (R1).

10. Projecteur (10) d'éclairage selon l'une quelconque des revendications précédentes, **caractérisé en ce qu'**il comporte un boîtier (12) globalement cylindrique dans lequel est agencé au moins le premier réflecteur arrière (R1) et le second réflecteur avant (R2).

11. Projecteur (10) d'éclairage selon l'une quelconque des revendications précédentes, **caractérisé en ce que** le premier faisceau lumineux est apte à remplir une fonction de feu anti-brouillard.

12. Projecteur (10) d'éclairage selon l'une quelconque des revendications précédentes, **caractérisé en ce que** le second faisceau lumineux est apte à remplir une fonction de feu diurne.

## Claims

1. Motor vehicle headlamp (10) with two light sources, comprising:
- a first rear light reflector (R1), which is essentially in the form of a portion of a paraboloid, open towards the front and which is associated with a first point light source (S1) in order to produce a first light beam towards the front according to a first essentially longitudinal optical axis (B),
- a second front light reflector (R2), which is essentially in the form of a portion of a paraboloid, open towards the front and which is associated with a second point light source (S2) in order to produce a second light beam towards the front according to a second essentially longitudinal optical axis (C), the second front reflector (R2) being arranged in front of the first rear reflector (R1), the second light source (S2) being radially displaced in relation to the optical axis (B) of the first rear reflector (R1), **characterised in that** the second front reflector (R2) comprises a window (20) through which at least part of the first light beam is suitable for being propagated.

2. Headlamp (10) according to the preceding claim, **characterised in that** the window (20) formed in the second front reflector (R2) is centred according to the optical axis (B) of the first rear reflector (R1).

3. Headlamp (10) according to either of the preceding claims, **characterised in that** the optical axis (C) of the front reflector (R2) is parallel with and downwardly displaced in relation to the optical axis (B) of the rear reflector (R1).

4. Headlamp (10) according to any one of the preceding claims, **characterised in that** it has a vertical plane of symmetry (P) passing through the optical axis (B) of the first rear reflector (R1) and through the optical axis (C) of the second front reflector (R2).

5. Headlamp (10) according to the preceding claim, **characterised in that** the second light source (S2) is a lamp (36) arranged according to an axis (E), which extends in the plane of symmetry (P) and in an oblique way in relation to the optical axis (C) of the front reflector (R2).

6. Headlamp (10) according to any one of the preceding claims, **characterised in that** the portion of a paraboloid forming the first rear reflector (R1) is essentially in the form of a band, which extends transversely.

7. Headlamp (10) according to any one of the preceding claims, **characterised in that** the window (20) formed in the second front reflector (R2) is essentially in the form of a transverse band around which the second front reflector (R2) forms a ring.

8. Headlamp (10) according to any one of the preceding claims, **characterised in that** the first rear reflector (R1) is pivotally mounted about a transverse axis (D), which is orthogonal to the optical axis (B) of the first rear reflector (R1), between a low angular position in which the first light beam is directed substantially downwards and a high angular position in which the first light beam is directed substantially upwards.

9. Headlamp (10) according to the preceding claim, **characterised in that** the window (20) is sufficiently high so that essentially the totality of the first light beam is suitable for being propagated through said window (20), whatever the angular position of the first rear reflector (R1).

10. Headlamp (10) according to any one of the preceding claims, **characterised in that** it comprises an essentially cylindrical casing (12) in which at least the first rear reflector (R1) and the second front reflector (R2) are arranged.

11. Headlamp (10) according to any one of the preceding claims, **characterised in that** the first light beam is suitable for acting as a fog lamp.

12. Headlamp (10) according to any one of the preceding claims, **characterised in that** the second light beam is suitable for acting as a daytime running lamp.

## Patentansprüche

1. Scheinwerfer (10) mit zwei Lichtquellen für Kraftfahrzeuge, mit:
- einem ersten, hinteren Lichtreflektor (R1), der allgemein die Form eines nach vorne offenen Paraboloid-Bereichs hat und der einer ersten punktförmigen Lichtquelle (S1) so zugeordnet ist, dass längs einer ersten, allgemein in Längsrichtung verlaufenden optischen Achse (B) ein erstes nach vorne gerichtetes Lichtbündel gebildet wird,
- einem zweiten, vorderen Lichtreflektor (R2), der allgemein die Form eines nach vorne offenen Paraboloid-Bereichs hat und der einer zweiten punktförmigen Lichtquelle (S2) so zugeordnet ist, dass längs einer zweiten, allgemein in Längsrichtung verlaufenden optischen Achse (C) ein zweites nach vorne gerichtetes Lichtbündel gebildet wird, wobei der zweite, vordere Reflektor (R2) vor dem ersten, hinteren Reflektor (R1) angeordnet ist, wobei die zweite Lichtquelle (S2) zur optischen Achse (B) des ersten, hinteren Reflektors (R1) radial versetzt ist,
**dadurch gekennzeichnet, dass** der zweite, vordere Reflektor (R2) ein Fenster (20) aufweist, durch das hindurch sich wenigstens ein Teil des ersten Lichtbündels auszubreiten vermag.

2. Scheinwerfer (10) nach dem vorhergehenden Anspruch,
**dadurch gekennzeichnet, dass** das im zweiten, vorderen Reflektor (R2) ausgebildete Fenster (20) längs der optischen Achse (B) des ersten, hinteren Reflektors (R1) zentriert ist.

3. Scheinwerfer (10) nach einem der vorhergehenden Ansprüche,
**dadurch gekennzeichnet, dass** die optische Achse (C) des vorderen Reflektors (R2) zur optischen Achse (B) des hinteren Reflektors (R1) parallel und nach unten versetzt ist.

4. Scheinwerfer (10) nach einem der vorhergehenden Ansprüche,
**dadurch gekennzeichnet, dass** er eine senkrechte Symmetrieebene (P) aufweist, die durch die optische Achse (B) des ersten, hinteren Reflektors (R1) und durch die optische Achse (C) des zweiten, vorderen Reflektors (R2) verläuft.

5. Scheinwerfer (10) nach dem vorhergehenden Anspruch,
**dadurch gekennzeichnet, dass** die zweite Lichtquelle (S2) eine Lampe (36) ist, die längs einer Achse (E) angeordnet ist, die in der Symmetrieebene (P) und schräg zur optischen Achse (C) des vorderen Reflektors (R2) verläuft.

6. Scheinwerfer (10) nach einem der vorhergehenden Ansprüche,
**dadurch gekennzeichnet, dass** der den ersten, hinteren Reflektor (R1) bildende Paraboloid-Bereich allgemein die Form eines sich quer erstreckenden Streifens hat.

7. Scheinwerfer (10) nach einem der vorhergehenden Ansprüche,
**dadurch gekennzeichnet, dass** das im zweiten, vorderen Reflektor (R2) gebildete Fenster (20) allgemein die Form eines quer verlaufenden Streifens hat, um den herum der zweite, vordere Reflektor (R2) einen Ring bildet.

8. Scheinwerfer (10) nach einem der vorhergehenden Ansprüche,
**dadurch gekennzeichnet, dass** der erste, hintere Reflektor (R1) um eine quer verlaufende Achse (D) herum zwischen einer unteren Winkelstellung, in der das erste Lichtbündel im Wesentlichen nach unten ausgerichtet ist, und einer oberen Winkelstellung, in der das erste Lichtbündel im Wesentlichen nach oben ausgerichtet ist, schwenkbar montiert ist, die zur optischen Achse (B) des ersten, hinteren Reflektors (R1) orthogonal ist.

9. Scheinwerfer (10) nach dem vorhergehenden Anspruch,
**dadurch gekennzeichnet, dass** die Höhe des Fensters (20) ausreicht, damit sich im Wesentlichen das gesamte erste Lichtbündel ungeachtet der Winkelstellung des ersten, hinteren Reflektors (R1) durch die Öffnung (20) hindurch auszubreiten vermag.

10. Scheinwerfer (10) nach einem der vorhergehenden Ansprüche,
**dadurch gekennzeichnet, dass** er ein allgemein zylindrisches Gehäuse (12) aufweist, in dem wenigstens der erste, hintere Reflektor (R1) und der zweite, vordere Reflektor (R2) angeordnet sind.

11. Scheinwerfer (10) nach einem der vorhergehenden Ansprüche,
**dadurch gekennzeichnet, dass** das erste Lichtbündel die Funktion einer Nebelleuchte zu erfüllen vermag.

12. Scheinwerfer (10) nach einem der vorhergehenden Ansprüche,
**dadurch gekennzeichnet, dass** das zweite Lichtbündel die Funktion eines Tagfahrlichts zu erfüllen vermag.
